Europäisches Patentamt

(19) European Patent Office

Office européen des brevets

(11) Numéro de publication: **0 130 392**
**B1**

(12) **FASCICULE DE BREVET EUROPEEN**

(45) Date de publication du fascicule du brevet: **02.09.87**

(21) Numéro de dépôt: **84106317.5**

(22) Date de dépôt: **02.06.84**

(51) Int. Cl.⁴: **B 25 J 15/06,** B 66 C 1/02

(54) **Ventouse de préhension et de manutention de petits objets délicats.**

(30) Priorité: **17.06.83 FR 8310210**

(43) Date de publication de la demande:
**09.01.85 Bulletin 85/02**

(45) Mention de la délivrance du brevet:
**02.09.87 Bulletin 87/36**

(84) Etats contractants désignés:
**BE CH DE GB IT LI LU NL SE**

(56) Documents cités:
**BE-A- 662 499**
**CH-A- 361 383**
**GB-A- 813 265**
**GB-A-1 230 070**
**US-A-2 858 009**
**US-A-3 174 789**

(73) Titulaire: **SYSPRO**
**91, avenue de la Libération**
**F-54000 Nancy (FR)**

(72) Inventeur: **Alvernhe, Gilles**
**26 Rue Dupont des Loges**
**F-54000 Nancy (FR)**

(74) Mandataire: **Puit, Thierry et al**
**c/o Centre de Recherches de Pont-à-Mousson**
**B.P. 28**
**F-54703 Pont-à-Mousson Cedex (FR)**

EP 0 130 392 B1

Courier Press, Leamington Spa, England.

## Description

La présente invention est relative à une ventouse de préhension et de manutention de petits objets délicats tels que par exemple, mais non exclusivement, des bonbons en chocolat à transférer par exemple repidement de leur moule jusqu'à une boîte de rangement en vue de leur mise en boîte atomatique. Pour ce faire, on utilise une ou plusieurs ventouses montées à l'extrémité d'un bras de robot ou de manipulateur industriel se déplaçant avec une grande rapidité. La ventouse, du type à cône souple et élastique de préhension, saisit l'objet par succion, étant reliée à une conduite d'aspiration portée par le robot lui-même.

Le problème de manutention et de préhension de petits objets délicats de confiserie tels que les bonbons en chocolat, de petits objets en alimentation en général, mais également en d'autres domaines (pharmacie par exemple) est d'autant plus difficile à résoudre que la ventouse doit répondre à un certain nombre d'impératifs qui sont:

— une préhension douce n'entraînant pas de dégradation de l'objet délicat;

— l'adaptabilité de la ventouse à différentes formes géométriques du bonbon (cylindrique, prismatique, ovoïde, sphérique, prismatique à arêtes vives ou arrondies, surfaces lisses ou rainurées ou présentant des aspérités régulières ou non suivant les dessins ou inclusions à la surface du bonbon;

— stabilité de la préhension ou de la saisie afin de ne pas lâcher prise malgré la grande vitesse de fonctionnement du robot et les vibrations qui peuvent en résulter à l'extrémité du poignet du robot. La stabilité de saisie doit être également positionnelle afin de conserver la position et les orientations de prise depuis la saisie du bonbon jusqu'à sa dépose et au cours des manutentions répétées, ce qui implique une certaine rigidité de préhension malgré la souplesse précitée;

— l'alimentarité des matériaux constituant la ventouse afin que ceux-ci soient compatibles avec les petits objets de confiserie, au sens chimique et du point de vue de la législation des produits alimentaires.

On connaît des ventouses de préhension de petits objets délicats de confiserie comportant un corps cylindrique dont une extrémité est portée par un appareil de manutention ou manipulateur ou poignet de robot, aet raccorée à une conduite de vide, et dont l'autre extrémité est évasée en trompette ou bien en cône souple de préhension. De telles ventouses sont réalisées en matériau souple et déformable. L'extrémité évasée ou cône de préhension présente l'inconvénient de ne s'appliquer que sur des surfaces planes, comme cela est illustré par le brevet FR—A—2 126 174.

On connaît aussi par le brevet BE—A—662 449 un préhenseur à ventouses constituées par une cuvette de retenue rigide ayant des flancs inclinés dont les faces internes sont recouvertes de caoutchouc au néoprène. Chaque cuvette est suspendue à la face inférieure d'un boîtier rigide par une paroi en caoutchouc au néoprène.

On connaît encore par le brevet GB—A—1 230 070 un dispositif de préhension à ventouse dans lequel une ventouse en matériau flexible est moulée sur une douille cylindrique taraudée intérieurement. Celle-ci se visse sur le filetage extérieur d'un adaptateur dont la tête, munie d''ailes débordantes, est reçue dans les rainures d'un support solidaire d'un bras.

La présente invention a pour objet une ventouse de préhension de petits objets délicats, notamment de confiserie, qui réponde à tous les impératifs précités et qui notamment s'adapte aux formes nombreuses et diverses des bonbons en chocolat ainsi qu'à différentes surfaces de ceux-ci, lisses ou présentant des sinuosités, reliefs de formes et de dispositions régulières, géométriques ou non.

La ventouse de l'invention, du type comportant un corps cylindrique susceptible d'être fixé à une extrémité à un manipulateur industriel ou robot et d'être raccordé à une conduite de vide, comportant à une autre extrémité un cône de préhension, et du type réalisé en matériau souple et élastique tel qu'un élastomère alimentaire, est caractérisé en ce que le cône de préhension à la partie inférieure du corps de la ventouse en silicone est tapissé intérieurement par une jupe évasée mince et souple en latex qui se prolonge sensiblement en-dessous du cône de préhension.

D'autres caractéristiques et avantages apparaîtront au cours de la description qui va suivre.

Au dessin annexé donné uniquement à titre d'exemple,

— la Fig. 1 est une vue schématique en plan d'un installation de manutention de bonbons en chocolat utilisant le préhenseur de l'invention entre une sortie de machine fabriquant lesdits bonbons et un transporteur de boîtes où doivent être rangés les bonbons;

—la Fig. 2 est une vue de détail en grande échelle du préhenseur ou de la ventouse de l'invention avec demi-élévation et demi-coupe méridienne;

— la Fig. 3 est une vue à moitié en élévation et à moitié en coupe méridienne d'une partie de préhenseur suivant l'invention en cours de moulage avec un insert de moulage;

— la Fig. 4 est une vue correspondant à la Fig. 2 du préhenseur ou de la ventouse d l'invention saisissant un petit objet de forme quelconque et déformée par la succion;

— la Fig. 5 est une vue en perspective à plus grande échelle du préhenseur ou de la ventouse de l'invention au cours de la saisie d'un petit objet à cannelures.

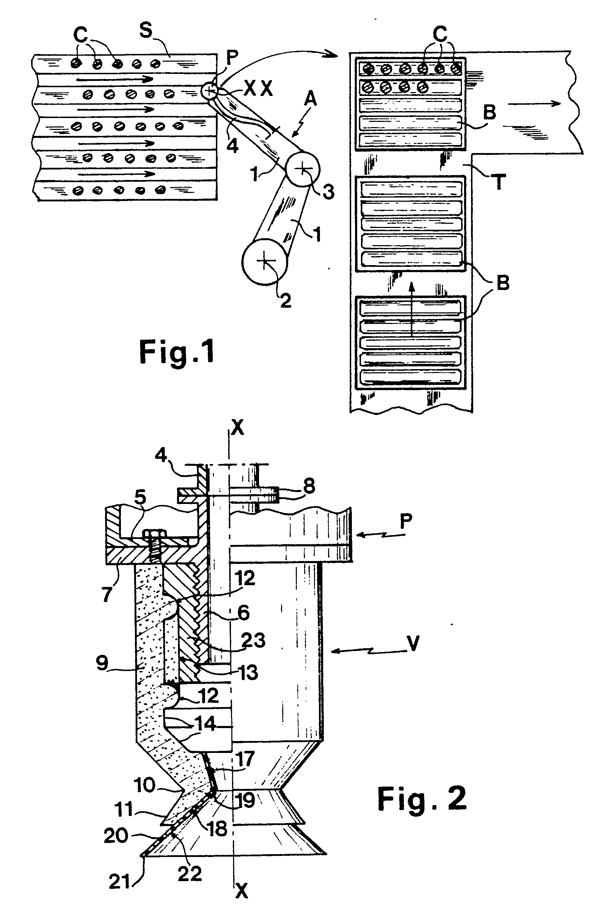

Suivant l'exemple d'exécution de la Fig. 1, le préhenseur ou la ventouse de l'invention est utilisé(e) dans une installation de manutention de bonbons C ou crottes de chocolat ou chocolats entre une sortie S de machine à mouler lesdits chocolats C, comportant par exemple plusieurs couloirs parallèles d'évacuation des chocolats C, et un transporteur T de boîtes B à garnir et emplir desdits chocolats C.

La ventouse ou le préhenseur non représenté(e) à la Fig. 1 est monté(e) au poignet P d'un robot articulé A (ou manipulateur ou appareil de manutention) comportant des bras articulés 1 autour d'un pivot 2 central et d'une articulation 3. Le poignet P d'axe XX peut lui-même être articulé d'une manière connue et non représentée. Le poignet P est raccordé à une source d'aspiration non représentée par un conduit d'aspiration 4.

Plus en détail (Fig. 2), le poignet P d'axe XX, ayant par exemple la forme d'un moyeu creux cylindrique à bride interne 5, reçoit une douille tubulaire metallique filetée 6 de raccordement de la ventouse V de l'invention au poignet P. La douille métallique 6 comporte une bride 7 fixable sur la bride 5 du poignet P et un organe de raccordement, par exemple une bride 8, à la conduite d'aspiration 4 pourvue d'une bride correspondante.

La ventouse V de l'invention a, comme connu, une forme générale extérieure cylindrique de révolution d'axe XX en 9 étranglée à sa partie inférieure en une gorge 10 circulaire, à flancs tronconiques, de conicité inverse, l'une convergeant vers l'axe XX, l'autre divergeant à partir de l'axe XX. La partie inférieure de la ventouse V située au-dessous de la gorge 10 et divergeant à partir de l'axe XX est appelée cône 11 centreur ou cône de préhension. La partie de ventouse V constituée par le corps cylindrique 9, la gorge 10 et le cône 11 est connue en soi, de même qu'est connue la réalisation de ce corps 9, 10, 11 en un matériau souple et élastique tel que par exemple un caoutchouc de silicone de dureté 18° Shore A. Ainsi, ce corps souple est également déformable comme on le verra plus loin.

Conformément à l'invention, le corps 9, 10, 11 de la ventouse V, qui est creux, comporte une surface interne complexe de révolution obtenue par moulage, et constituée par les détails particuliers suivants, de haut en bas, c'est-à-dire de la tranche supérieure plane du corps cylindrique 9 destiné à ectre appliqué contre la bride 7 de la douille métallique 6 jusqu'au cône inférieur 11.

A l'intérieur du corps cylindrique 9 proprement dit, la paroi de forme générale cylindrique également comporte des protrubérances internes, circulaires d'axe XX, de révolution, à profil en demi-lune 12, par exemple au nombre de deux. Les protubérances 12 assurent la fixation en translation du corps 9 par rapport à un insert métallique 23 décrit plus loin. Entre les deux protubérances internes 12 sont prévues des cannelures longitudinales 13, parallèles à l'axe XX, formant en quelque sorte ponts entre les protrubérances annulaires internes 12, et espacées les unes des autres. Les cannelures 13 sont par exemple au nombre de quatre régulièrement réparties tout autour de l'axe XX. Les cannelures 13 assurent la fixation en rotation du corps 9 par rapport à l'insert métallique 23 décrit plus loin. Audessous de la protrubérance annulaire interne 12 qui forme un étranglement de la cavité du corps 9 se trouve une chambre cylindroconique 14 correspondant à la fois à la partie inférieure cylindrique 9 et au flanc conique convergent de la gorge 10.

Cette cavité de ventouse V est obtenue par moulage à l'aide d'un insert tubulaire de moulage 15, métallique, ou noyau, dont les formes extérieures correspondent aux formes intérieures de la cavité de corps 9, 10, 11 à obtenir et dont la paroi interne est taraudée en 16 afin de se fixer par vissage sur un outil de moulage non représenté. L'insert de moulage 15 a une forme générale tubulaire d'axe XX.

De plus, la partie inférieure 10, 11 de la ventouse à flancs tronconiques et à cône 11 comporte une cavité interne biconique à partie 17 convergeant vers le bas, vers l'axe XX, et à partie tronconique 18 divergeant vers le bas à partir de l'axe XX. Cette cavité interne biconique 17, 18 présente ainsi une arête 19 interne circulaire de retenue de l'organe préhenseur proprement dit de la ventouse V.

L'organe préhenseur proprement dit de la ventouse V est, conformément à l'invention, une jupe mince évasée 20 en matériau souple et alimentaire tel que le latex naturel. L'épaisseur de la jupe 20 est sensiblement inférieure à celle du corps cylindrique 9 et celle du cône 11. La jupe mince 20 est appliquée contre la paroi interne de la cavité biconique 17—18 de la partie inférieure du corps de ventouse 9, 10, 11 en silicone. La jupe mince 20 est collée pendant la phase de moulage du corps 9 sur cette cavité biconique qu'elle épouse. Le collage de la jupe 20 en latex sur la paroi interne en silicone de la cavité biconique 17—18 s'effectue après enduction préalable de la jupe 20 d'un film adhésif par exemple un produit adhésif dit "RHODORSIL primaire MB" vendu par Rhône-Poulenc, la dénomination "RHODORSIL" étant uen marque déposée par "RHONE-POULENC — INDUSTRIE". Elle tapisse intérieurement le côe 11.

Par comparaison avec le vêtement féminin, la jupe 20 comporte une taille étranglée qui s'applique sur l'arête 19 de la cavité biconique 17, 18 et un bustier qui s'applique sur la paroi 17 qui converge vers l'axe XX. La jupe 20 proprement dite épouse la partie inférieure divergente 18 de la cavité biconique et se prolonge sensiblement endessous du cône centreur 11 afin de pouvoir se déformer librement au-dessous dudit cône 11, en vue de s'appliquer sur les objets à saisir non seulement suivant un cercle de contact 21 qui est la grande base inférieure de la jupe tronconique mais encore suivant la plus grande partie de la paroi interne 22 située au-dessous du cône centreur 11.

Après enlèvement (démoulage) de l'insert de moulage 15, qui peut s'effectuer de déformant purement et simplement le corps souple 9, 10, 11 en silicone, on introduit dans la cavité du corps 9 un insert métallique 23 dit d'utilisation, qui a la même forme que l'insert de moulage 15 et qui a par conséquent la forme générale d'une douille tubulaire intérieurement taraudée, mais qui ne comporte pas de forme de noyau correspondant à la protrubérance inférieure 12 ni à la chambre cylindro-conique 14 afin de laisser toute sa liberté et sa souplesse au corps 9, 10, 11 en élastomère, au moins à sa partie inférieure. Par conséquent la protrubérance supérieure 12 et les cannelures 13 s'adaptent à des formes conjuguées extérieures de l'insert d'utilisation 23, L'insert d'utilisation 23 sert au raccordement du corps souple et élastique 9, 10, 11 de la ventouse à la douille filetée 6. Le corps souple et élastique 9, 10, 11 est littléralement ancré sur l'insert d'utilisation 23, par les protubérances 12 et par les cannelures 13, de sorte qu'il en est solidaire en translation et rotation. L'insert d'utilisation 23 qui affleure la tranche d'extrémité supérieure du corps cylindrique 9 se visse sur la douille filetée 6 dont l'extrémité inférieure débouche ainsi dans la gorge ménagée par la protrubérance interne inférieure 12 et dans la chambrage cylindro-conique 14. Ainsi l'aspiration pourra être exercée à partir du conduit 4 et de la cavité de la douille filetée 6 jusqu'à l'intérieur de la jupe souple 20.

FONCTIONNEMENT (Fig. 1—2 et 4):

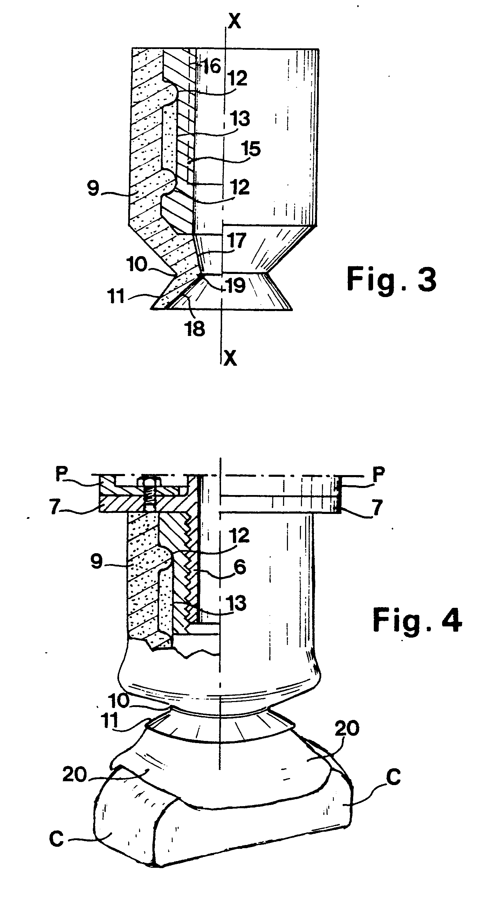

Soit à saisir un petit objet délicat C de forme quelconque, d'un volume susceptible d'être saisi entre pouce et index de la main de l'homme, par exemple un bonbon en chocolat (Fig. 4).

A l'aide du robot A, la ventouse V non encore sous dépression, est rapprochée de l'objet C à saisir, et la jupe en latex 20 est appliquée sur l'objet C de manière à en épouser le maximum de surface.

Puis une dépression est admise dans la cavité de la ventouse V par la conduite d'aspiration 4 et la douille 6.

La jupe mince et souple 20 s'applique alors encore plus étroitement sur la surface irrégulière de l'objet C. Elle en épouse les moindres saillies les moindres arêtes, bosses et bourrelets, les moindres creux, replis et sinuosités, et elle y adhère fortement par dépression, cependant que par cette même dépression, la partie inférieure du corps cylindrique 9 de la ventouse V se déforme, se recroqueville, le cône 11 se rapprochant de l'insert rigide d'utilisation 23 et de la douille 6 d'amenée du vide. La partie supérieure du cône cylindrique souple 9 qui enveloppe l'insert rigide d'utilisation 23 ne se déforme pas, étant supportée par ledit insert rigide 23 (illustration en trait plein à la Fig. 4, en comparaison avec la forme normale au repos, avant déformation à la Fig. 2).

Le parfaite déformabilité de la jupe 20 et la déformabilité de la partie inférieure du corps 9 de la ventouse assurent l'acte de préhension d'un objet C ou C 1 même fragile. Cependant, après déformation du corps 9 de la ventouse V et de la jupe 20, sous l'action de la dépression pendant la saisie de l'objet C, l'ensemble ventouse V de l'objet C ou C 1 devient rigide.

L'objet C étant ainsi saisi par dépression ou succion au moyen de la ventouse V, est transportable à l'aide du robot A par exemple entre une sortie S de machine à fabriquer les objets C et une boite B où les objets C doivent être rangés comme cela est illustré à la Fig. 1.

Pour relâcher l'objet C, c'est le processus inverse qui se déroule. L'admission du vide par la conduite 4 et la douille 6 est brusquement interrompue, et de l'air filtré et ec est de nouveau admis dans la cavité de la ventouse V. On dit que le vide est cassé. L'aire remplaçant le vide occupe rapidement l'intérieur de la ventouse V, s'insère entre la jupe 20 et l'objet C, détache ainsi la jupe 20 de l'objet C, s'expanse à l'intérieur de la partie inférieure du corps 9 et expanse ladite partie inférieure du corps 9 qui reprend sa forme normale (illustrée à la Fig. 2). La jupe 20, tout en restant appliquée sur l'objet C, n'y adhère plus. Il ne reste qu'à e'loigner la ventouse de l'objet C à l'aide du robot A pour aller saisir un autre objet C.

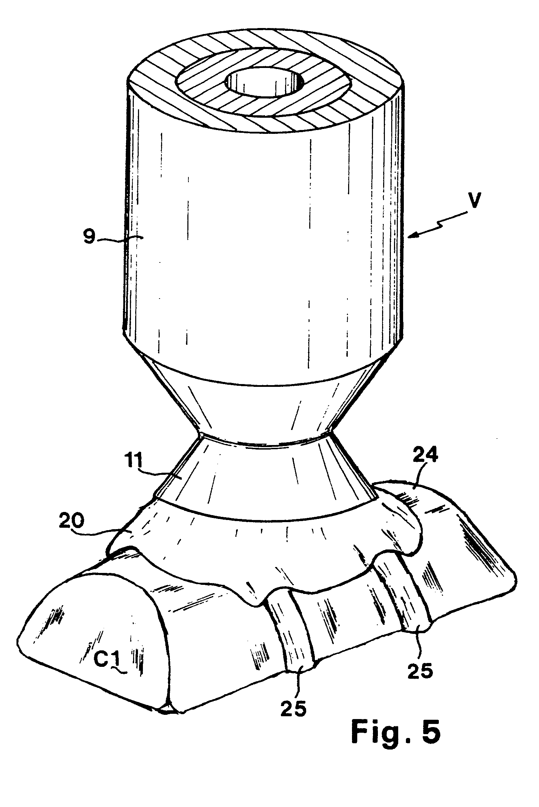

Le Fig. 5 illustre l'adhérence par le vide de la jupe 20 de la ventouse de l'invention sur un objet C 1 de forme différent: la forme est cylindrique en 24 et comporte un certain nombre de bourrelets ou cannelures annulaires 25. On voit la jupe 20 se plisser en épousant la forme des bourrelets annulaires 25 tout en s'appliquant sur la surface extérieure de l'objet C 1 suivant une étendue de surface en calotte cylindrique.

AVANTAGES:

Grâce au cône 11 en élastomère et à la déformabilité de la partie inférieure du corps 9 en élastomère, et grâce à la jupe 20 en latex, une préhension douce n'entraînant pas de dégradations de l'objet saisi est assurée par la ventouse V de l'invention.

Grâce à la parfaite déformabilité de la jupe mince et souple en latex 20, et grâce à la déformabilité du cône 11 et de la partie inférieure du corps cylindrique 9, la ventouse V de l'invention s'adapte à différentes formes géométriques de l'objet à saisir comme cela est illustré aux Fig. 4 et 5. On conçoit que la ventouse de l'invention peut s'adapter à d'autres forms: primatique à arêtes vives ou arrondies, ovoïde, sphériques, surfaces lisses ou rainurées ou présentant des aspérités régulières ou non suivant les dessins ou inclusions à la surface du bonbon à saisir. La jupe mince 20 s'applique même sur les objets à contre-dépouilles: c'est ainsi qu'elle peut épouser les circonvolutions des cerneaux de noix.

Grâcce à la rigidité de préhension obentue par l'ensemble monobloc ventouse V objet C ou C1 lorsque la ventouse V est sous dépression, une parfaite stabilité de la préhension ou de la saisie est obtenue et permet de ne pas lâcher prise malgré la grande vitesse de fonctionnement du robot et les vibrations qui peuvent en résulter à l'extrémité du poignet P du robot A. Cette stabilité de saisie permet de conserver la position et les orientations de prise de l'objet C ou C1 par rapport au poignet P du robot A, depuis la saisie jusqu'à sa dépose et au cours des manutentions répétées.

Grâce à la réalisation de la jupe mince et souple 20 en latex, la ventouse V de l'invention bénéficie d'une parfaite alimentarité, compatible avec les petits objets de confiserie à saisir, au sens chimique de mot alimentaire et du point de vue de la législation des produits alimentaires.

## Revendications

1. Ventouse de prehension de petits objets du type comportant un corps (9—11) cylindrique susceptible d'être fixé à une extrémité à un manipulateur industriel ou robot (A) et d'être raccordé à une conduite de vide (4) et comportant à une autre extrémité un cône de préhension (11) et du type réalisé en matériau souple et élastique tel qu'un élastomère alimentaire et du type dans lequel le cône de préhension (11) est tapissé et prolongé à sa partie inférieure évasée par une jupe souple évasée (20), caracterisée en ce que le cône de préhension (11) en élastomère à la partie inférieure déformable du corps cylindrique (9) de la ventouse en silicone est tapissé intérieurement par une jupe évasée mince en latex (20) qui se prolonge sensiblement en-dessus du cône de préhension.

2. Ventouse suivant la revendication 1 caractérisée en ce que le corps tubulaire (9) de la ventouse comporte intérieurement et dans sa partie cylindrique des protubérances annulaires (12 coaxiales à profil en demi-lune espacées l'un de l'autre, et formant des étranglements de la cavité du corps (9), et entre les deux protubérances (12) des cannelures longitudinales (13) régulièrement reparties autour de l'axe de révolution du corps cylindrique (9) et formant ponts entre les protubérances (12).

3. Ventouse suivant l'une des revendications 1 ou 2 du type dans lequel le corps (9—11) comporte intérieurement un insert métallique tubulaire (23) de raccordement du corps (9) de la ventouse (V) avec une conduite (4) d'aspiration amenée au poignet (P) d'un robot (A) sur lequel est montée la ventouse (V;, caractérisé en ce que la protrubérance annulaire supérieure (12) et les cannelures longitudinales (13) du corps tubulaire (9) de la ventouse s'adaptent à des formes conjuguées extérieures de l'insert (23).

4. Ventouse suivant la revendication 1 caractérisée en ce que la jupe (20) a une épaisseur sensiblement inférieure à celle du cône de préhension (11).

5. Ventouse suivant la revendication 1 caractérisée en ce que la jupe (20) présente une forme biconique épousant la cavité biconique (17—18) de la partie inférieure du corps (9) et du cône (11).

6. Ventouse suivant la revendication 6 caractérisée en ce que la cavité biconique (17—18) de la partie inférieure du cylindre (9) et du cône (11) comporte une partie (17) convergeant vers le bas, vers l'axe (XX) de la ventouse (V; et une partie cônique (18) divergeant vers le bas, à partir de l'axe (XX) de la ventouse (V), les deux parties (17—18) se raccordant suivant une arête interne circulaire (19) de retenue de la jupe (20).

## Patentansprüche

1. Saugnapfgreifer zur Handhabung von kleinen Gegenständen, mit einem an einem Ende an einen Manipulator oder Roboter befetigbaren zylindrischen Körper (9—11), der mit einer Saugleitung (4) verbunden ist und an einem anderen Ende einen Greifteller (11) aus einem biegsamen und elastischen Material, wie insbesondere einem Elastomer, aufweist, der an seinem konisch aufgeweiteten Unterteil mit einer aufgeweiteten biegsamen Schürze (20) bedeckt und verlängert ist, dadurch gekennzeichnet, daß der Greifteller (11) aus elastomerem Material an seinem deformierbaren Unterteil des zylindrischen Körpers (9) des Saugnapfgreifers aus Silikon innen durch eine dünne aufgeweitete Schürze (20) aus Latex bedeckt ist, die sich deutlich unterhalb des Greiftellers fortsetzt.

2. Saugnapfgreifer nach Anspruch 1, dadurch gekennzeichnet, daß der rohrförmige Körper (9) des Saugnapfgreifers innen und in seinem zylinderförmigen Abschnitt koaxiale ringförmige Vorsprünge (12) mit halbmondförmigem Profil aufweist, die mit Abstand zueinander ausgebildet sind und Einschnürungen des Hohlraumes des Körpers (9) bilden, und daß zwischen zwei Vorsprügen (12) längsverlaufende Rillen (13) vorgesehen sind, die um die Drehachse des cylindrischen Körpers (9) reglemäßig verteilt sind und Brücken Zwischen den Vorsprüngen (12) bilden.

3. Saugnapfgreifer nach einem der Ansprüche 1 oder 2, bei dem der Körper (9—11) innen einen metallischen rohrförmigen Einsatz (23) für die Verbindung des Körpers (9) des Saugnapfgreifers (V) mit einer Saugleitung (4) an einem Endteil (P) eines Robotors (A) aufweist, an dem der Saugnapfgreifer (V) montiert ist, dadurch gekennzeichnet, daß der oben liegende ringförmige Vorsprung (12) und die Längsrillen (13) des rohrförmigen Körpers (9) des Saugnapfgreifers sich an konjugierte äußere Formen des Einsatzes (23) anpassen.

4. Saugnapfgreifer nach Anspruch 1, dadurch gekennzeichnet, daß die Schürze (20) eine Dicke aufweist, die wesentlich geringer als die des Greifkonus (11) ist.

5. Saugnapfgreifer nach Anspruch 1, dadurch gekennzeichnet, daß die Schürze (20) eine doppelkonische Form aufweist, die sich an den doppelkonischen Hohlraum (17—18) des Unterteiles des Körpers (9) und des Greiftellers (11) anschmiegt.

6. Saugnapfgreifer nach Anspruch 5, dadurch gekennzeichnet, daß der doppelkonische Hohlraum (17—18) des Unterteiles des Zylinders (9) und Greiftellers (11) einen nach unten und zur Achse (X—X) des Saugnapfgreifers (V) konvergierenden Abschnitt und einen konischen Abschnitt (18) aufweist, der nach unten von der Achse (X—X) des Saugnapfgreifers (V) divergiert und daß die beiden Abschnitte (17—18) längs einer kreisförmigen inneren Haltekante (19) für die Schürze (20) zusammenlaufen.

## Claims

1. Suction disc for gripping small objects of the type comprising a cylindrical body (9—11) able to be fixed to one end of an industrial manipulator or robot (A) and to be connected to a vacuum pipe (4) and comprising at another end a gripping cone (11) and of the type made from a flexible and . elastic material such as an elastomer suitable for use with food products and of the type in which the gripping cone (11) is lined and extended at its flared lower end by a flared flexible skirt (20), characterised in that the elastomeric gripping cone (11) at the lower deformable part of the cylindrical body (9) of the silicone suction disc is lined internally by a thin flared latex skirt (20) which extends substantially below the gripping cone.

2. Suction disc according to claim 1, characterised in that the tubular body (9) of the suction disc comprises internally and in its cylindrical part coaxial annular projections (12) having a half-moon profile and spaced apart and forming restrictions of the cavity of the body (9) and between the two projections (12) longitudinal channels (13) uniformly distributed about the axis of revolution of the cylindrical body (9) and forming bridges between the projections (12).

3. Suction disc according to one of claims 1 to 2 of the type in which the body (9—11) comprises internally a tubular metal insert (23) for connecting the body (9) of the suction disc (V) to a suction pipe (4) fitted to the wrist (P) of a robot (A) on which the suction disc (V) is mounted, characterised in that the upper annular projection (12) and the longitudinal channels (13) of the tubular body (9) of the suction disc adjust to the external matching shapes of the insert (23).

4. Suction disc according to claim 1, characterised in that the skirt (20) has a thickness substantially less than that of the gripping cone (11).

5. Suction disc according to claim 1, characterised in that the skirt (20) has a biconical shape matching the biconical cavity (17—18) of the lower part of the body (9) and of the cone (11).

6. Suction disc according to claim 5, characterised in that the biconical cavity (17—18) of the lower part of the cylinder (9) and of the cone (11) comprises a part (17) converging in a downwards direction towards the axis (XX) of the suction disc (V) and a conical part (18) diverging in a downwards direction, from the axis (XX) of the suction disc (V), the two parts (17—18) joining along a circular inner edge (19) for retaining the skirt (20).

Fig.1

Fig. 2

Fig. 3

Fig. 4

**Fig. 5**